# EUROPEAN PATENT SPECIFICATION

(11) **EP 0 789 122 B1**
(45) Date of publication and mention of the grant of the patent: **26.07.2000**
(21) Application number: 97500027.4
(22) Date of filing: 05.02.1997
(51) Int. Cl.: E05B 65/19

(54) **Improvements to locks for automobile vehicles**
Verbesserungen an Schlössern für Kraftfahrzeuge
Perfectionnements apportés aux serrures pour véhicules automobiles

(30) Priority: 09.02.1996 ES 9600319
(43) Date of publication of application: 13.08.1997
(73) Proprietor: Tubsa Automocion, S.L., 08960 Sant Just Desvern (ES)
(72) Inventor: Lopez Mateus, Pere, 08028 Barcelona (ES)
(74) Representative: SUGRANES - VERDONCES - FERREGÜELA

(56) References cited:
- DE-A- 3 148 972
- FR-A- 2 261 398
- GB-A- 1 282 344
- GB-A- 1 283 153

## Description

### Field of the invention

The present invention relates to some improvements to locks for automobile vehicles, applicable particularly for retaining the bonnet of such vehicles, although the device could also be applied for retaining the boot lid or the access cover for filling the vehicle with fuel.

### Background of the invention

Known in the art are locks for automobile vehicles for retaining the bonnet or engine cover of such vehicles, two of which locks are normally provided on vehicles of a certain category in order to ensure retention of the bonnet and to eliminate noises between the bonnet and the bodywork of the vehicle.

As is known, on automobile vehicles designed for driving on the right-hand side of the road the steering wheel is situated on the left of the vehicle, while on those designed for driving on the left-hand side of the road the steering wheel is situated on the right of the vehicle. For this reason, the manual control for the means of actuation of the locks is situated near the steering wheel, that is, on the left in the first case and on the right in the second.

When two locks are used, one of them presents on each of the two sides of its housing guiding means for the actuation mechanism of same, while the other lock presents only one guiding means opposite the first lock; and when only one lock is used, this lock presents its guiding means for the lock actuation mechanism on the left-hand side on vehicles designed for driving on the right-hand side of the road and on the right-hand side on vehicles designed for driving on the left-hand side of the road.

The actuation mechanism normally consists in a cable attached to the manual control which the driver must operate in order to open the bonnet, which cable, duly guided throughout its route to the locks, is connected to the first of the two locks of the vehicle and, from the latter, to the second lock via the same cable or normally by another cable, or else it is connected to the single lock.

Each one of the locks of the known type includes, apart from guiding means for their actuation mechanisms, two parts which can be coupled together, one male and the other female.

The male part is made up of a stem fixed to the interior of the vehicle bonnet, with a free end which presents a conical thickened section, forming a peripheral step upon which there rests and is retained a bushing which can slide along the stem and is forced against the step by an elastic means.

The female part, fixed to the chassis of the vehicle, is made up of a housing provided with a transverse through-orifice into which said thickened section of the stem of the male part can penetrate with a close fit, while the interior of the housing has an oscillating piece fitted in it, provided with a transverse through-orifice which corresponds with that of the housing and is guided in the latter for rotation thereof with respect to the central geometrical axis common to both orifices.

The oscillating piece is subjected to the action of a spring fitted on a bracket inside the housing, one end of which spring rests against a stop of the housing, while the other end rests against the interior of a cavity of the oscillating piece in which it is partially housed, thus keeping said oscillating piece resting against an interior zone of the housing, while at the same time one part of the spring by way of a foot housed in said cavity traverses the orifice of the oscillating piece, in which position it retains the male part of the lock, previously inserted in said two transverse orifices of the female part, when it rests against the step of the stem. And said oscillating piece has a peripheral appendage for securing some actuating mechanisms of same in order to release the male part from the female part by rotation of the oscillating piece against the action of its spring, the foot of which moves, withdrawing from the orifice and no longer traversing it.

The known locks, due to their inherent constitution, must be manufactured according to two symmetrical embodiments, one for actuation thereof from the left-hand side of the vehicle and the other from the right-hand side, which means two symmetrical locks in the case of using a single lock for the bonnet of the pertinent automobile vehicle, and double the number of locks, that is, four, in the case of using two locks for the pertinent automobile vehicle, with the consequent cost of manufacturing same and the cost deriving from the necessary warehousing and management of such sets of locks by the automobile manufacturers and distributors of same to the repair workshops, as well as by the latter.

### Summary of the invention

The present invention is directed to a lock for automobile vehicles, of the type which includes two parts which can be coupled together, one male and the other female, the male part being made up of a stem to be fixed inside the bonnet of the vehicle and having its free end with a conical thickened section, forming a peripheral step upon which there rests and is retained a bushing which can slide along the stem and is forced against the step by an elastic means, and the female part, to be fixed to the chassis of the vehicle, is made up of a housing provided with a transverse through-orifice into which the said thickened section of the stem of the male part can penetrate with a close fit, while the interior of the housing has an oscillating piece fitted in it, provided with a transverse through-orifice which corresponds with that of the housing and is guided in the latter for rotation thereof with respect to the central geometrical axis common to both orifices, and the oscillating piece is subjected to the action of at least one spring fitted on a bracket inside the housing, one end of which at least one spring rests against a stop of the housing, while the other end rests against the interior of a cavity of the oscillating piece in which it is partially housed, which at least one spring keeps said oscillating piece resting against an interior zone of the housing, while at the same time one part of the at least one spring by way of a foot traverses the orifice of the oscillating piece, in which position it retains the male part of the lock, previously inserted in said orifices of the female part, when it rests against the step of the stem, and said oscillating piece has a peripheral appendage for securing some actuating mechanisms of same in order to release the male part from the female part by rotation of the oscillating piece against the action of its at least one spring, the foot of which withdraws from the orifice and no longer traverses it. Such a lock is well-known.

The aforesaid lock is characterized in that the oscillating piece has two diametrically opposed stop means situated in the cavity of the oscillating piece; in that said oscillating piece is subjected to the simultaneous and counterpoised action of two springs which act on the corresponding sides of the two stop means and tend to keep the oscillating piece in a position in which both stop means are centred in the transverse and longitudinal plane of the housing, which contains the central geometrical axis common to the orifices of the housing and of the oscillating piece; in that both springs, mounted and guided on two brackets inside the housing, rest by one of their ends against two opposite stops of the housing and by the other end against the respective sides of the stop means, traversing the cavity of the oscillating piece and crossing its orifice symmetrically; and in that the appendage for securing the actuating mechanisms of the oscillating piece is aligned with said stop means.

Application of the improvements in locks for automobile vehicles in question provides, amongst others, the following advantages: reduction of manufacturing cost due to having to provide a single type of lock applicable, in the desired number -one or two - to vehicles with either left-hand or right-hand steering wheels; simplification in terms of parts management and elimination of possible supply errors at any of the stages of commercialization and warehousing thereof, including at automobile vehicle repair workshops; and centred and symmetrical securing at two opposite sides of the bonnet stem.

The improvements of the invention offer the advantages described above, in addition to others which can be deduced easily from the example of a case of embodiment of said improvements, which are described below in order to aid understanding of the characteristics outlined above, while at the same time revealing various details of same, attaching for the purposes some drawings which, solely by way of non-restrictive example of the scope of the invention, show a practical case of embodiment of a lock for automobile vehicles provided with the improvements of the invention, as well as showing the known locks.

### Brief description of the drawings

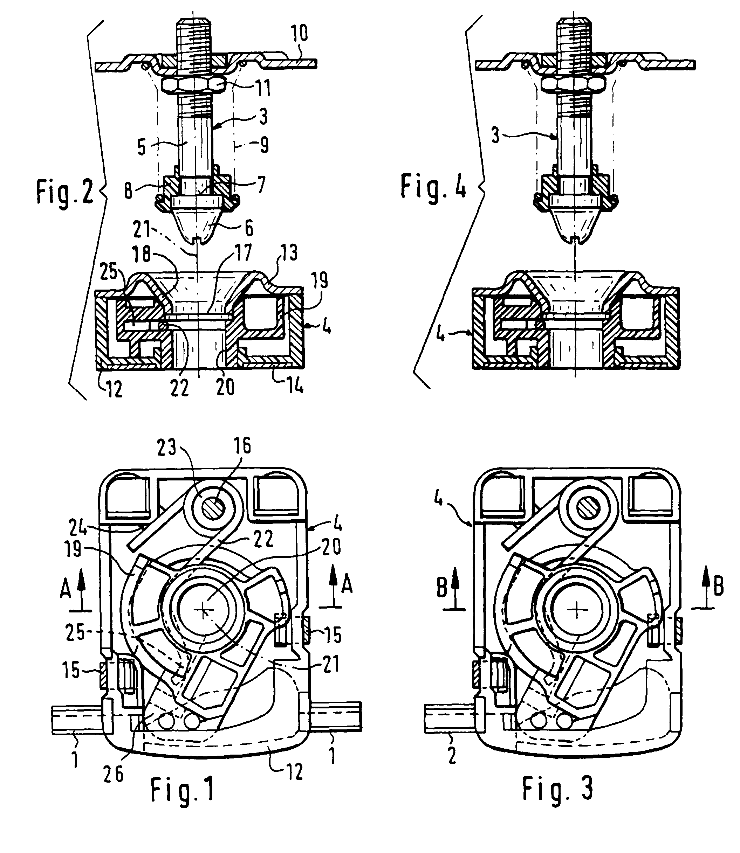

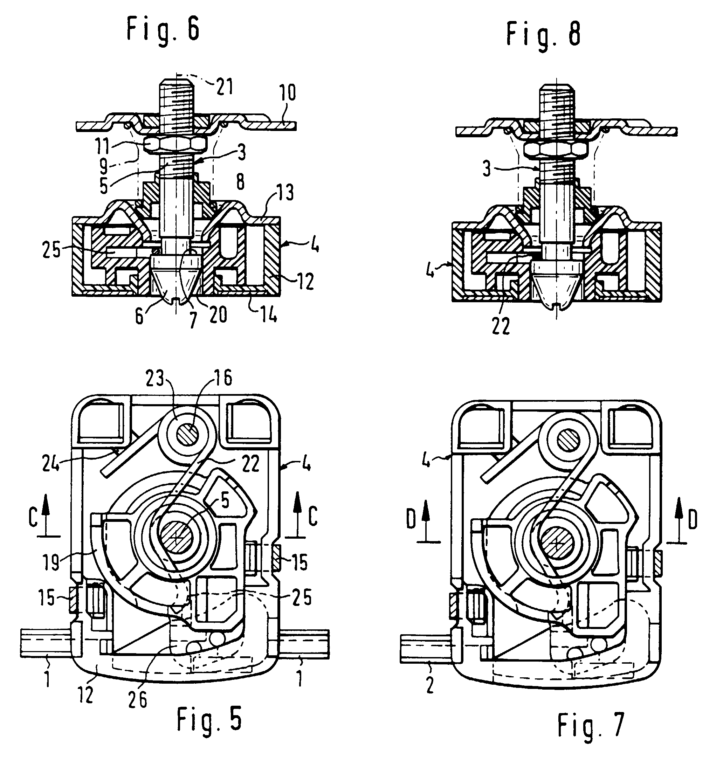

Figures 1 to 4 show a pair of locks for automobile vehicles which are already known in the art for retaining the bonnet or cover of the engine, in the open position, while Figures 5 to 8 show said pair of locks in the closed bonnet position. This pair of locks corresponds to an automobile vehicle designed to travel on the right-hand side of the road; and, in the case of an automobile vehicle designed to travel on the left-hand side of the road, the locks are symmetrical with those shown in Figures 1 to 8.

Figure 1 shows the left lock of the pair of locks in the open position and in a plan view pertaining to the female part of the lock, in which the upper plate of same has been eliminated in order to show its interior; Figure 2 corresponds to a section along A-A of Figure 1, showing both female and male parts of the lock, with the latter separated from the former; Figure 3 shows the other lock of the pair of locks in the same position as in Figure 1, while Figure 4 corresponds to a section along B-B of Figure 3 under the same conditions as Figure 2. Figure 5 shows the female part, under the same conditions as Figure 1 but in closed position and showing in cross section the stem of the corresponding male part, the rest of which is for the purposes of clarity not shown; Figure 6 corresponds to a section along C-C of Figure 5, in which both male and female parts are shown in the closed position of the lock; Figure 7 shows the other lock of the pair under the same conditions as Figure 5; and Figure 8 corresponds to a section along D-D of Figure 7, under the same conditions as Figure 6.

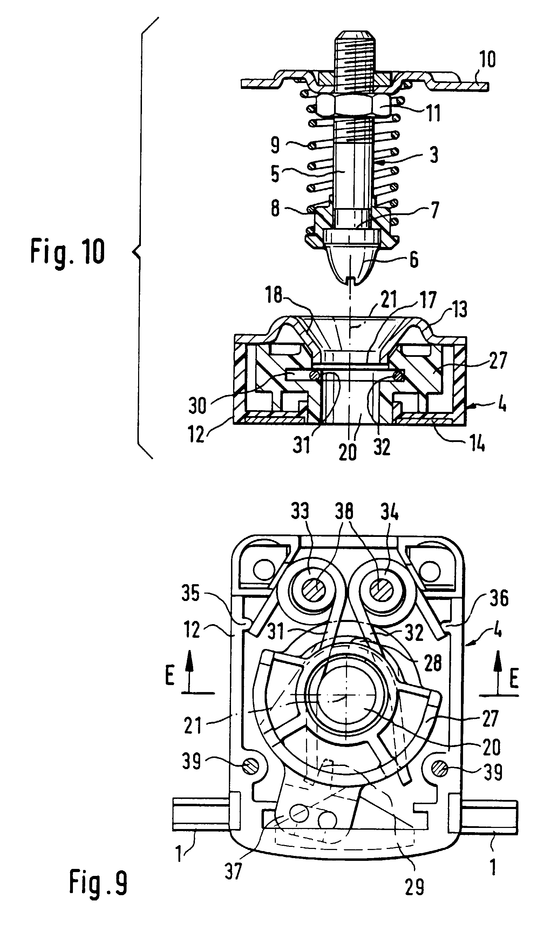

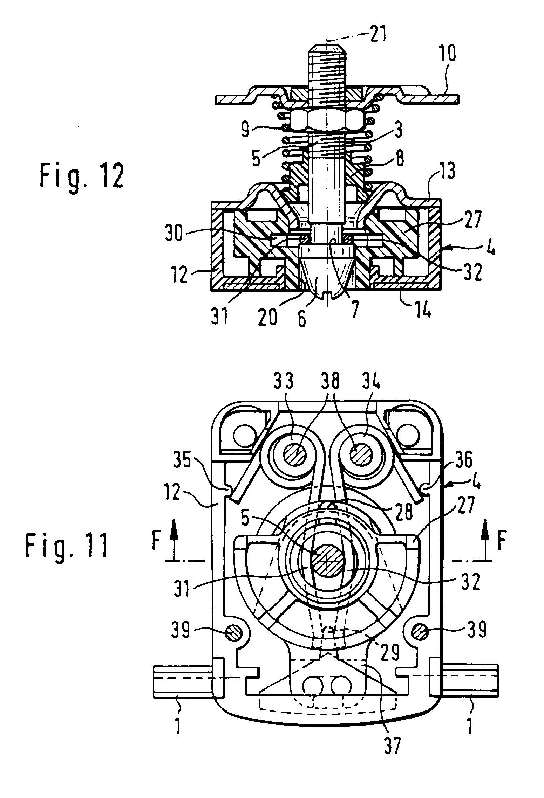

Figures 9 to 12 show a lock for automobile vehicles provided with the improvements of the invention, Figures 9 and 10 showing said lock in the open position and Figures 11 and 12 showing said lock in the closed position. Figure 9 shows the lock of the invention in plan view, with its upper plate eliminated to show the interior of the lock, while Figure 10 corresponds to a section along E-E of Figure 9, in which the male and female parts of the lock are shown in their open position; Figure 11 shows the female part of the lock of the invention in plan view, in its closed position and with the upper plate eliminated, but showing in section the stem of the male part; Figure 12 corresponds to a section along F-F of Figure 11, showing the male and female parts of the lock in its closed position.

### Description of an embodiment of the invention

The two locks of the known type, shown in Figures 1 to 4 in open position and in Figures 5 to 8 in closed position and in a plan view and another view in elevation section for each lock and for each position of same, are made in the same way, but the left-hand side lock (Figures 1 and 5) has on each of its two sides guiding means (1) for the actuating mechanisms of the lock, while the other lock (Figures 3 and 7) has only one guiding means (2) facing the guiding means (1) of the first lock. Both locks of the pair of locks are situated separately in accordance with the width of the bonnet of the vehicle on which they are fitted, so that the gap shown between Figures 1 and 3 and Figures 5 and 7 and between their respective sections as shown in Figures 2, 4, 6 and 8 are not real.

Each one of the locks of known type includes two parts which can be coupled together, one male part (3) and one female part (4). The male part (3) is made up of a stem (5) attached to the inside of the vehicle bonnet (not shown), the free end of which has a conical thickened section (6), forming a peripheral step (7) on which there rests and is retained a bushing (8) which can slide along the stem (5) and is forced against the step (7) by an elastic means (9), which is shown schematically and can consist in a helical spring. The stem (5) is secured, preferably by screw threading, onto a plate (10) and retained by a nut (11), by means of which arrangement it is possible to adjust the downward projecting length of the stem (5) with respect to the plate (10), it being obvious that any other conventional arrangement could be used, even one in which the stem (5) were welded to the plate (10), which plate would be fixed to the lower part of the pertinent vehicle bonnet, thereby leaving no possibility of the direct adjustment outlined, though this could be achieved through the fitting between the plate (10) and the bonnet.

The female part (4) is fixed to the chassis of the vehicle (not shown) and is made up of a housing (12) which comprises an upper plate (13) and a lower plate (14) (Figure 2, since in Figure 1 the upper plate (13) has been eliminated). Both plates are attached to each other, with the body of the housing (12) lying between them, by some lugs (15) which come downwards from the upper plate and are bent beneath the body of the housing, slotting into corresponding openings made for the purpose in the lower plate (14) (Figure 1), and both upper and lower plates are likewise fixed by the rivet (16). The housing (12) has a transverse through-orifice (17) into which the thickened section (6) of the stem (5) of the male part (3) can penetrate, while to facilitate entry of the thickened section the upper plate (13) has a truncoconical widening (18) in an upward direction, that is, towards the exterior.

To the interior of the housing (12) is fitted an oscillating piece (19) also provided with a transverse through-orifice (20), which corresponds with the transverse through-orifice (17) of the housing (12). The oscillating piece (19) is guided in the housing (12) for rotation thereof around the central geometrical axis (21) common to both transverse through-orifices (17) and (20).

The oscillating piece (19) is subjected to the action of a spring (22) which is mounted on a bracket (23) in the interior of the housing (12). One end of this spring rests against a stop (24) of the housing, while its other end rests against a wall of the interior of a cavity (25) of the oscillating piece in which it is partially housed. In Figures 1 and 3 the oscillating piece (19) is shown rotated towards the right through operation of the actuation mechanisms of said oscillating pieces, when the driver actuates the manual control of a cable linked to same and which, duly guided along its route from said manual control to the lock, is connected to the first lock and from this to the second lock by the same cable or normally by another (cables and manual control not shown), in which position of the two oscillating pieces their respective springs (22) are moved towards the left without said springs traversing the corresponding orifice (20) of the respective oscillating piece, thereby releasing the male part (3) of the lock, so that the bonnet is moved upwards by the effect of its corresponding elastic means (not shown) and that of the male part; Figures 2 and 4 show the gap between the male and female parts of the lock, when the male part is released. When the driver ceases to act upon said manual control the spring (22) of each one of the two locks pushes towards the left, that is, in a direction opposite to that outlined above, upon the respective oscillating piece, in such a way that the latter rests on the right-hand side of each housing (12) and a foot-like part of the spring, housed in the cavity (25) of the oscillating piece, traverses the orifice (20) of said piece. In this position of the two locks, if the bonnet is pushed downwards and, therefore, the two male parts (3) of the two locks of same descend, the conical thickened sections (6) of each male part (3) face and are inserted into the two transverse orifices (17) and (20) of the housing (12) and of the oscillating piece (9), moving the corresponding bushing (8) upwards against the action of the elastic means (9), until said conical thickened section (6) is left just beneath the part of the spring (22) which traverses the orifice of the oscillating piece (19), in which position the spring (22) retains the male part (3) of each lock, when it rests against the peripheral step (7) of the stem (5), as shown in Figures 5 to 8 corresponding to the two locks in this closed position of same, that is, the position in which the female part of each lock retains the respective male part.

The oscillating piece (19) of each of the two locks in question has a peripheral appendage (26), to which appendages are attached the aforesaid actuation mechanisms of each lock, in order to be able to release the male part from the female part by rotation of the oscillating piece against the action of its spring.

Figures 3, 4, 7 and 8 are shown with only some of the reference numbers marked, as the right-hand lock comprises the same parts as the left-hand one, the sole difference lying in the guiding means (2) instead of the guiding means (1) of the left-hand lock.

Once the bonnet is closed and retained due to the pair of locks being in closed position, as shown in Figures 5 to 8, when the driver operates the locks via the corresponding manual control and actuation mechanisms to open the bonnet, this leads to rotation towards the right of the two oscillating pieces (19) of the two locks, followed by movement of the intermediate lug of each of the two springs (22) which cease to traverse the orifice (20) of each lock, coming away from the step (7) of the male part (3), thus leaving said male part released from each lock and automatically opening the bonnet through the action of its elastic means, as outlined, with the gap between the male and female parts of the pair of locks being shown in Figures 1 to 4.

Where a single lock is used for the bonnet of an automobile vehicle, said lock will correspond to the one shown in open and closed positions in Figures 3, 4, 7 and 8, where the vehicle is designed for driving on the right-hand side of the road. And where the vehicle is designed for driving on the left-hand side of the road, then the lock would be symmetrical with respect to that just described, in which case the actuation mechanisms, normally consisting in a cable linked to the manual control to be operated by the driver in order to be able to open the bonnet, would be connected to said single lock.

In accordance with Figures 9, 10, 11 and 12, the lock for automobile vehicles provided with the improvements of the invention is of the type described above, with the same reference numbers for common parts of the locks described above in respect of said type, in order to avoid repeating the explanation of those common parts. The lock of the invention has an oscillating piece (27) provided with two stop means (28) and (29), diametrically opposite each other and situated in the cavity (30) of said oscillating piece, which is subjected to the simultaneous and counterpoised action of two springs (31) and (32) which act upon the corresponding sides of the two stop means (28) and (29) and tend to keep the oscillating piece in a position in which both stop means are centred in the transverse and longitudinal planes of the housing (12), which contains the central geometrical axis (21) common to the transverse through orifices (17) and (20) of the housing (12) and of the oscillating piece (27).

The two springs (31) and (32) are mounted and guided, respectively, on the brackets (33) and (34) to the interior of the housing and rest by one of their ends against oppositely situated stops (35) and (36) of the housing and by their other ends against the respective sides of the stop means (28) and (29) (Figures 9 and 11). In the closed position of the lock the two springs traverse the cavity (30) of the oscillating piece (27) and cross its transverse orifice (20) symmetrically (Figures 11 and 12), while in the open position of the lock the two springs come away and no longer traverse said orifice (20) (Figures 9 and 10). The peripheral appendage (37) of the oscillating piece (27) for securing the actuation mechanisms of the latter is aligned with said stop means (28) and (29).

Figures 9 and 10 show the lock provided with the improvements of the invention in the position in which the oscillating piece (27) is rotated towards the right due to operation by the driver of the manual control linked to the cable which pulls in that direction on said oscillating piece, in which position the stop means (28) and (29) move symmetrically and in opposite directions to the corresponding branches of the springs (31) and (32), which withdraw so that they no longer traverse the orifice (20) of the oscillating piece, thereby releasing the male part (3) of the lock which moves upwards under the action of the elastic means of the bonnet (not shown) and of the male part, as shown in Figure 10. Once it has been completely opened and the desired operations or observations carried out, the bonnet is closed again by pressing downwards upon it until the male part (3) of the lock, and specifically the conical thickened section (6) of the stem (5), is inserted through the transverse through-orifices (17) and (20) of the female part (4), when the bushing (8) slides upwards overcoming the opposing action of the elastic means (9), passing down beneath said conical thickened section (6) to the two branches of the springs (31) and (32), which give way and move apart due to their elasticity and due to the conical shape of said thickened section, until both branches come together again and rest strongly against the peripheral step (7), thereby securing the male part (3) as shown in Figures 11 and 12. If the driver once again operates the aforesaid manual control, the oscillating piece (27) will once again rotate towards the right (Figure 9) and said male part (3) will be released from the female part (4) (Figure 10), as outlined above.

In this example, the upper (13) and lower (14) plates are attached to each other and to the body of the housing (12), by means of rivets (38) and (39), although they can be attached by other conventional means.

In the event of use of a pair of locks of the invention, the two locks will be linked to each other via their respective peripheral appendages (37) and by means of the cable of the corresponding actuation mechanisms.

From what has been outlined it emerges that only one type of lock needs be manufactured, and can be employed as a single lock or as two (which are identical), while the same type of lock of the invention can also be used, to a number of one or two, whether the automobile vehicle is designed to drive on the left-hand side of the road or on the right-hand side of the road, as described above.

It should be noted that in the embodiment of the lock for automobile vehicles provided with the improvements of this Patent of Invention all variants of detail which experience and practice may make advisable in respect of shapes and dimensions, both absolute and relative, can be applied, as can the number of parts and the materials used in same and other circumstances of an accessory nature, and any modifications of construction details as are compatible with the scope of protection defined by the single chain.

## Claims

1. Lock for automobile vehicles, of the type which includes two parts (3, 4) which can be coupled together, one male (3) and the other female (4), the male part (3) being made up of a stem (5) to be fixed inside the bonnet of the vehicle and having its free end with a conical thickened section (6), forming a peripheral step (7) upon which there rests and is retained a bushing (8) which can slide along the stem (5) and is forced against the step by an elastic means (9), and the female part (4), to be fixed to the chassis of the vehicle, is made up of a housing (12) provided with a transverse through-orifice (17) into which the said thickened section of the stem (5) of the male part (3) can penetrate with a close fit, while the interior of the housing (12) has an oscillating piece (27) fitted in it, provided with a transverse through-orifice (20) which corresponds with that (17) of the housing (12) and is guided in the latter for rotation thereof with respect to the central geometrical axis (21) common to both orifices (17, 20), and the oscillating piece (27) is subjected to the action of at least one spring (31, 32) fitted on a bracket (33, 34) inside the housing (12), one end of which at least one spring (31, 32) rests against a stop (35, 36) of the housing (12), while the other end rests against the interior of a cavity (30) of the oscillating piece (27) in which it is partially housed, which at least one spring (31, 32) keeps said oscillating piece (27) resting against an interior zone of the housing (12), while at the same time one part of the at least one spring (31, 32) by way of a foot traverses the orifice (20) of the oscillating piece (27), in which position it retains the male part (3) of the lock, previously inserted in said orifices (17, 20) of the female part (4), when it rests against the step (7) of the stem (5), and said oscillating piece (27) has a peripheral appendage (37) for securing some actuating mechanisms of same in order to release the male part (3) from the female part (4) by rotation of the oscillating piece (27) against the action of its at least one spring (31, 32), the foot of which withdraws from the orifice and no longer traverses it, characterized in that the oscillating piece (27) has two diametrically opposed stop means (28, 29) situated in the cavity (30) of the oscillating piece (27); in that the oscillating piece (27) is subjected to the simultaneous and counterpoised action of two springs (31, 32) which act on the corresponding sides of the two stop means (28, 29) and tend to keep the oscillating piece (27) in a position in which both stop means (28, 29) are centred in the transverse and longitudinal plane of the housing (12), which contains the central geometrical axis (21) common to the orifices (17, 20) of the housing (12) and of the oscillating piece (27); in that both springs (31, 32), mounted and guided on two brackets (33, 34) inside the housing 12, rest by one of their ends against two opposite stops (35, 36) of the housing (12) and by the other end against the respective sides of the stop means (28, 29), traversing the cavity (30) of the oscillating piece (27) and crossing its orifice (20) symmetrically; and in that the appendage (37) for securing the actuating mechanisms of the oscillating piece is aligned with said stop means (28, 29).

## Patentansprüche

1. Schloß für Kraftfahrzeuge des Typs, das zwei Teile (3, 4) umfaßt, die miteinander gekoppelt werden können, und zwar einem männlichen (3) und einem weiblichen (4) Teil, wobei das männliche Teil (3) aus einem Schaft (5) besteht, der im Inneren der Haube des Fahrzeugs befestigt ist und dessen freies Ende einen konischen, verdickten Abschnitt (6) hat, der eine Umfangsstufe (7) ausbildet, auf der eine Buchse (8) ruht und gehalten ist, die entlang des Schaftes (5) gleiten kann und mit Hilfe eines elastischen Mittels (9) gegen die Stufe gedrückt ist, und wobei das weibliche Teil (4), das an dem Chassis des Fahrzeugs befestigbar ist, aus einem Gehäuse (12) besteht, das mit einer transversalen Durchgangsöffnung (17) versehen ist, in die der verdickte Abschnitt des Schaftes (5) des männlichen Teils (3) mit einer engen Passung bzw. einem Festsitz eindringen kann, während das Innere des Gehäuses (12) ein darin eingepaßtes, oszillierendes Teil (27) hat, das mit einer transversalen Durchgangsöffnung (20) versehen ist, die derjenigen (17) des Gehäuses (12) entspricht und das in Letzterem zu seiner Drehung in Bezug auf die den beiden Öffnungen (17, 20) gemeinsame zentrale, geometrische Achse (21) geführt ist, und wobei das oszillierende Teil (27) der Wirkung wenigstens einer Feder (31, 32) unterworfen ist, die auf einem Träger (33, 34) im Inneren des Gehäuses (12) ausgesetzt ist, wobei ein Ende der wenigstens einen Feder (31, 32) an einem Anschlag (35, 36) des Gehäuses (12) ruht, während das andere Ende an dem Inneren eines Hohlraums (30) des oszillierenden Teils (27) ruht, indem es teilweise aufgenommen ist, wobei die wenigstens eine Feder (31, 32) das oszillierende Teil (27) an einer inneren Zone des Gehäuses (12) ruhend hält, während gleichzeitig ein Teil der wenigstens einen Feder (31, 32) mit Hilfe eines Fußes die Öffnung (20) des oszillierenden Teiles (27) quert, wobei es in dieser Stellung das männliche Teil (3) des Schlosses hält, das zuvor in die Öffnungen (17, 20) des weiblichen Teils (4) eingeführt wurde, wenn es an der Stufe (7) des Schaftes (5) ruht, und wobei das oszillierende Teil (27) ein umfängliches Anhängsel (37) zur Befestigung einiger seiner Betätigungsmechanismen hat, um das männliche Teil (3) von dem weiblichen Teil (4) durch Drehung des oszillierenden Teils (27) gegen die Wirkung seiner wenigstens einen Feder (31, 32) zu lösen, wobei deren Fuß sich von der Öffnung zurückzieht und diese nicht länger quert, dadurch gekennzeichnet, daß das oszillierende Teil (27) zwei diametral gegenüberliegende, in dem Hohlraum (30) des oszillierenden Teils (27) angeordnete Anschlagmittel (28, 29) aufweist; daß das oszillierende Teil (27) der gleichzeitigen und gegengewichteten Wirkung zweier Federn (31, 32) ausgesetzt ist, die auf die entsprechenden Seiten der beiden Anschlagmittel (28, 29) wirken und dazu neigen, das oszillierende Teil (27) in einer Stellung zu halten, in der beide Anschlagmittel (28, 29) in der transversalen und longitudinalen Ebene des Gehäuses (12) zentriert sind, das die den Öffnungen (17, 20) des Gehäuses (12) und des oszillierenden Teils (27) gemeinsame zentrale geometrische Achse (21) beinhaltet; daß beide Federn (31, 32), die an zwei Trägern (33, 34) im Inneren des Gehäuses (12) montiert und geführt sind, mit einem ihrer Enden an zwei gegenüberliegenden Anschlägen (35, 36) des Gehäuses (12) ruht und mit dem anderen Ende an den entsprechenden Seiten der Anschlagmittel (28, 29) ruht, den Hohlraum (30) des oszillierenden Teils (27) quert und dessen Öffnung (20) symmetrisch kreuzt; und daß das Anhängsel (37) zum Befestigen bzw. Sichern der Betätigungsmechanismen des oszillierenden Teils mit den Anschlagmitteln (28, 29) fluchtet.

## Revendications

1. Cerrures pour véhicules automobiles, du type qui comprend deux parties (3, 4) pouvant s'accoupler entre elles, une partie mâle (3) et une partie femelle (4), la partie mâle (3) étant constituée par une tige (5) à fixer à l'intérieur du capot du véhicule et dont l'extrémité libre présente une section élargie conique (6), formant un échelon périphérique (7) sur lequel s'appuie et est retenue une douille (8) pouvant glisser le long de la tige (5) et qui est poussée contre l'échelon par un élément élastique (9), et la partie femelle (4) qui doit être fixée au chassis du véhicule étant constituée par un boîtier (12) pourvu d'un orifice transversal qui le traverse (17), dans lequel ladite section élargie de la tige (5) peut pénétrer de façon serrée, et à l'intérieur du boîtier (12) est montée une pièce oscillante (27) pourvue d'un orifice transversal qui la traverse (20) et qui correspond à celui (17) du boîtier (12), et qui est guidée à l'intérieur de celui-ci pour permettre sa rotation par rapport à l'axe géométrique central (21) commun aux deux orifices (17, 20), la pièce oscillante (27) étant soumise à l'action d'au moins un ressort (31, 32) monté sur un support (33, 34) à l'intérieur du boîtier (12), une extrémité dudit ressort (31, 32) s'appuyant contre une butée (35, 36) du boitier (12), alors que l'autre extrémité s'appuie contre l'intérieur de la cavité (30) de la pièce oscillante (27) dans laquelle elle se trouve partiellement logée, ledit ressort (31, 32) retenant ladite pièce oscillante (27) contre une zône intérieure du boîtier (12), alors qu'une partie dudit ressort (31, 32), de façon semblable à une patte, traverse l'orifice (20) de la pièce oscillante (27), en retenant dans cette position la partie mâle (3) de la cerrure (4) introduite préalablement dans lesdits orifices (17, 20) de la partie femelle (4) lorsqu'elle s'appuie contre l'échelon (7) de la tige (5), et ladite pièce oscillante (27) présente un appendice périphérique (37) pour fixer les mécanismes de commande de celle-ci afin de libérer la partie mâle (3) de la partie femelle (4) par rotation de la pièce oscillante (27) contre l'action de son ressort (31, 32), dont la patte se retire de l'orifice et ne le traverse plus, **caractérisées** en ce que:
- la pièce oscillante (27) présente deux éléments de butée (28, 29) diamétralement opposés et logés dans la cavité (30) de la pièce oscillante (27) ;
- la pièce oscillante (27) est soumise à l'action simultanée et opposée de deux ressorts (31, 32) qui agissent sur les côtés correspondants des deux éléments de butée (28, 29) et qui ont tendance à maintenir la pièce oscillante (27) dans une position dans laquelle les deux éléments de butée (28, 29) sont centrés sur le plan transversal et longitudinal du boîtier (12) qui contient l'axe géométrique central (21) commun aux orifices (17, 20) du boîtier (12) et de la pièce oscillante (27);
- les deux ressorts (31, 32) montés et guidés sur deux supports (33, 34) à l'intérieur du boîtier (12), s'appuient par une de leurs extrémités contre deux butées opposées (35, 36) du boîtier (12) et par l'autre extrémité contre les côtés respectifs des éléments de butée (28, 29), en traversant la cavité (30) de la pièce oscillante (27) y en traversant symétriquement son orifice (20); et
- l'appendice (37) pour fixer les mécanismes de commande de la pièce oscillante est aligné avec lesdits moyens de butée (28, 29).
